# FASCICULE DE BREVET EUROPEEN

(11) **EP 2 881 371 B1**
(45) Date de publication et mention de la délivrance du brevet: **17.01.2018**
(21) Numéro de dépôt: 14306929.2
(22) Date de dépôt: 01.12.2014
(51) Int. Cl.: C02F 3/12, C02F 3/30

(54) **Station d'épuration comprenant une enceinte d'aération et une autre de clarification incluant un passage protégé vers une zone siphoïde**
Kläranlage beinhaltend ein Belüftungsbecken sowie ein Klärbecken mit einer geschützten, zu einer Heberzone führenden, Passage
Wastewater treatment plant with an aeration basin and a clarifier comprising a protected passage towards a siphoid zone.

(30) Priorité: 06.12.2013 FR 1362248
(43) Date de publication de la demande: 10.06.2015
(73) Titulaire: INNOCLAIR, 29830 Ploudalmezeau (FR)
(72) Inventeur: Guyader, Jean-Pierre, 29830 Ploudalmezeau (FR)
(74) Mandataire: Gicquel, Frédéric

(56) Documents cités:
- EP-A1- 2 743 209
- US-A1- 2003 034 300
- US-B1- 6 200 470

## Description

Le domaine de l'invention concerne la conception et la fabrication des équipements de traitement des eaux usées. Plus précisément, l'invention concerne les stations d'épuration, en particulier mais non exclusivement individuelles, du type intégrant un bassin d'aération et un bassin de clarification.

Dans le cadre de l'assainissement non collectif, on distingue les habitations reliées au réseau de collecte de leur commune et celles qui ne le sont pas. Jusqu'à récemment, les habitations non reliées au réseau de collecte étaient équipées généralement, voire dans le meilleur des cas, d'une fosse septique pour le traitement des eaux usées domestiques (hors eaux pluviales) associée à un bac à sable filtrant.

L'évolution des normes et réglementations impose désormais aux habitations non reliées au réseau de collecte de leur commune de disposer d'un système d'assainissement individuel, visant à renvoyer au milieu naturel les eaux traitées d'une qualité satisfaisante prédéterminée.

Les textes actuellement en vigueur définissent l'assainissement individuel, autrement désigné par assainissement non collectif (ANC) comme correspondant à « tout système d'assainissement effectuant la collecte, le prétraitement, l'épuration, l'infiltration ou le rejet des eaux usées domestiques des immeubles non raccordés au réseau public d'assainissement ».

Dans ce contexte, une solution pour les particuliers non reliés au réseau de collecte de leur commune consiste à recourir à l'installation d'une micro-station d'épuration.

Une micro-station d'épuration peut se définir comme une solution de traitement des eaux usées domestiques, fonctionnant à échelle réduite selon le même principe qu'une station d'épuration urbaine, ceci par la mise en oeuvre d'un procédé dit « à boue activée » ou « à culture fixée ».

Le procédé de traitement « à boue activée » consiste à mettre à contribution les micro-organismes ou les bactéries présents dans les eaux à traiter en vue de dégrader les matières organiques présentes dans les dites eaux, ceci sans recourir à l'adjonction de produits chimiques.

Un tel traitement permet de rejeter les eaux traitées directement dans le milieu naturel ou, alternativement, de les utiliser en irrigation.

On distingue, parmi les effluents rejetés par une habitation, deux catégories, à savoir :
- les « eaux grises », correspondant aux eaux provenant des lavabos, lave-linges, douche, etc. ;
- les « eaux-vannes », correspondant aux eaux rejetées par les toilettes.

L'ensemble de ces effluents contient :
- des matières organiques ;
- des matières azotées et phosphorées ;
- des micro-organismes pathogènes ;
- des matières en suspension pouvant provoquer des maladies, de la pollution organique et de l'eutrophisation.

Classiquement, les micro-stations d'épuration sont conçues pour réaliser les phases de traitement suivantes :
- la décantation, visant à retenir au fond de la cuve les matières les plus lourdes et à faire remonter en surface les plus légères ;
- l'aération, selon laquelle les « boues » en suspension subissent un traitement d'épuration, ceci en créant de manière séquentielle des périodes aérobies et des périodes d'anoxie, ce qui va permettre d'engendrer un phénomène de digestion des matières organiques, ainsi qu'une réduction des nitrates et des nitrites ;
- la clarification (éventuellement précédée d'une pré-clarification), visant à séparer les boues légères persistantes de l'eau épurée : dans cette phase, les boues restantes sont renvoyées dans le bassin de décantation ou dans le bassin de réaction, tandis que l'eau épurée est extraite de la micro-station pour être en général dispersée dans le sol.

Les avantages des micro-stations sont notamment les suivants :
- elles mettent en oeuvre des procédés de traitement écologique et n'utilisent aucun produit chimique pour traiter les eaux usées ;
- la surface au sol de la micro-station est notablement limitée et ne nécessite pas d'épandage sous-terrain, ce qui permet de les installer même dans des petits terrains, éventuellement avec un dénivelé ;
- la fréquence de vidange des boues est peu élevée comparée à celle d'une fosse septique ;
- elles ne dégagent pas d'odeurs.

En revanche, le traitement « à boue activée » implique un apport régulier de matières organiques pour permettre aux bactéries de se développer et donc de traiter les eaux. Aussi, une absence prolongée d'écoulement d'eau dans la micro-station impliquera la nécessité de réactivation des bactéries.

Selon l'art antérieur, on distingue deux types de micro-station d'épuration :
- les stations opérant une épuration par boue activée, telle que décrite précédemment ;
- les stations à culture fixée dans lesquelles les micro-organismes chargés du traitement se fixent sur un support en fond de cuve.

L'invention concerne tant les stations opérant un traitement dit « à boue activée » que les stations à culture fixée.

Une station de ce type se présente de façon générale sous la forme d'une cuve incluant deux enceintes, à savoir :
- une enceinte d'aération, incluant un conduit d'arrivée par lequel les eaux à traiter arrivent dans la station ;
- une enceinte de décantation/clarification, incluant un conduit de sortie par lequel les eaux épurées sont évacuées.

Récemment, il a été proposé de ménager, dans l'enceinte de décantation/clarification, une zone siphoïde constituant un passage obligé de circulation des eaux dans la station, reliant le volume interne de l'enceinte de clarification au conduit de sortie. Dans cette zone siphoïde, les eaux sont théoriquement faiblement chargées en matières en suspension, cette zone étant délimitée par une cloison siphoïde qui délimite, en son extrémité inférieure un passage d'entrée des eaux dans la zone siphoïde. Tel que décrit dans le document de brevet publié sous le numéro FR2376080, la fonction d'une telle cloison (ou lame) siphoïde est bien connue du domaine du traitement des eaux usées. En effet, cette « lame siphoïde » permet de ménager une structure au sein d'une cuve, semblable à un entonnoir, dans laquelle l'eau est moins chargée en matière en suspension que celle située à l'extérieure de cette structure.

De telles stations d'épuration donnent globalement satisfaction selon les critères d'épuration actuels.

Toutefois, il n'est pas exclu, dans des circonstances particulières que des floculats de matières pénètrent dans la zone siphoïde et soient même évacués par le conduit de sortie de la cuve.

Bien entendu, dans une telle situation, il peut en résulter que les eaux en sortie de la cuve ne sont plus conformes aux critères d'épuration.

Le phénomène selon lequel des floculats de matières pénètrent dans la zone siphoïde peut notamment être consécutif aux circonstances suivantes les matières en suspension présentent dans l'enceinte de clarification remontent à la surface de l'eau, entraînées notamment par le dégagement d'azote, et stagnent voire s'accumulent jusqu'à former une croûte. Cette croute peut se disloquer de façon naturelle ou forcée, des blocs de tailles plus ou moins conséquentes tendant alors à décanter jusqu'à, normalement, être reprises par une pompe présente dans l'enceinte de clarification en vue de rejeter lesdites boues vers l'enceinte d'aération.

Dans certains cas toutefois, il est possible que la phase de décantation des blocs de boues provenant de la croute disloquée coïncident avec une phase de déversement des eaux de l'enceinte d'aération vers l'enceinte de clarification. Ce déversement se traduit par une forme d'agitation des eaux présentes dans l'enceinte de clarification, contrariant la décantation. Cette agitation peut engendrer un flux ascendant dans l'enceinte de clarification, qui peut conduire à la remontée de certains blocs de boues (constituant en d'autres termes les floculats de matières) dans la zone siphoïde.

Comme indiqué précédemment, ce phénomène est indésirable puisqu'il conduit au rejet d'eaux épurées hors normes par rapport aux critères d'épuration actuels (et à fortiori par rapport aux critères futurs qui seront très probablement encore plus stricts).

On connaît également des documents US6200470, US2003/034300, et EP2743209, des stations d'épuration.

L'invention a notamment pour objectif de pallier cet inconvénient de l'art antérieur.

Plus précisément, l'invention a pour objectif de proposer une station d'épuration, du type incluant une enceinte d'aération et une enceinte de clarification, une zone siphoïde étant ménagée dans l'enceinte de clarification, qui supprime ou à tout le moins limite notablement le risque d'entrées de floculats dans la zone siphoïde.

Un autre objectif de l'invention est de fournir une telle station qui supprime ou à tout le moins limite notablement, le risque de sortie de floculats de matières par le conduit de sortie de la cuve.

Ces objectifs, ainsi que d'autres qui apparaîtront par la suite, sont atteints grâce à l'invention qui a pour objet une station d'épuration selon la revendication 1, du type comprenant une cuve incluant au moins deux enceintes, l'une d'aération et l'autre de clarification, les eaux à épurer passant de l'une dans l'autre, l'enceinte de clarification étant reliée à un conduit de sortie par une zone siphoïde délimitée par une cloison siphoïde dont une
extrémité inférieure forme un passage d'entrée dans la zone siphoïde, caractérisée en ce que l'enceinte de clarification inclut au moins un élément déviateur de flux ascendant placé sous le passage d'entrée dans la zone siphoïde, présentant un déflecteur incliné s'étendant d'une extrémité basse en chevauchement en hauteur du passage d'entrée à une extrémité haute écartée du passage d'entré

Suivant une projection sur un plan horizontal du déflecteur incliné et du passage d'entrée, on comprend que la projection du passage d'entrée est contenue à l'intérieure de la projection du déflecteur incliné. En effet, l'expression « un déflecteur incliné s'étendant d'une extrémité basse en chevauchement en hauteur du passage d'entrée à une extrémité haute du passage d'entrée » décrit un déflecteur sous-jacent au passage d'entrée qui présente, selon une vue du dessous, une première surface, dite extrémité basse, recouvrant la totalité du passage d'entrée et une extrémité haute écartée du passage d'entrée.

On comprend que, de cette façon, on crée à l'intérieur de l'enceinte de clarification une sorte de chicane en amont (par rapport à un flux ascendant des eaux d'enceinte de clarification) du passage d'entrée dans la zone siphoïde.

En d'autres termes, le passage d'entrée est protégé vis-à-vis de la remontée des matières présentes dans les eaux de l'enceinte de clarification, celles-ci étant déviées par le déflecteur qui les écarte du passage d'entrée.

En effet, lors de la remontée du niveau d'eau présente dans l'enceinte de clarification, le flux ascendant généré se traduit par une remontée des matières en suspension vers la surface de l'eau selon une direction sensiblement verticale. On comprend bien évidemment que ces matières n'ont pas pouvoir à zigzaguer et, en tout état de cause, à contourner le déflecteur pour entrer dans la chicane puis pénétrer dans le passage d'entrée dans la zone siphoïde.

Le risque que celle-ci pénètre dans la zone siphoïde est donc supprimé ou à tout le moins considérablement réduit.

Selon l'invention, le déflecteur s'étend à partir d'une paroi de l'enceinte de clarification.

La paroi de l'enceinte forme ainsi un support avantageux pour le déflecteur, la cloison siphoïde pouvant de façon préférée s'étendre en direction de ladite paroi de l'enceinte. Le déflecteur fait partie d'un élément en saillie de la paroi de l'enceinte de clarification, l'élément en saillie présentant une section triangulaire dont le pan inférieur constitue le déflecteur.

La chicane en amont du passage d'entrée dans la zone siphoïde peut ainsi être constituée efficacement et de façon clairement marquée.

On comprend ainsi que la section considérée est une section dans un plan essentiellement vertical et que l'un des pans ou côtés du triangle correspond à la coupe dans le plan vertical du déflecteur.

Dans ce cas, l'élément en saillie s'étend avantageusement à l'intérieur de l'enceinte selon une forme complémentaire d'au moins un élément en saillie à l'extérieur de l'enceinte.

Une telle forme en saillie à l'extérieur de l'enceinte va permettre d'améliorer la tenue de la cuve dans le sol, en présentant une surface essentiellement plane sur laquelle le matériau de remblaiement pourra exercer une force dirigée vers le bas contribuant à maintenir la cuve dans le sol.

Selon une autre caractéristique avantageuse de l'invention, la station comprend un deuxième élément déviateur de flux ascendant dans la zone siphoïde, placé au-dessus du passage d'entrée et sous le conduit de sortie.

Ainsi, dans l'hypothèse peu probable selon laquelle un ou plusieurs floculats de matières entre dans la zone siphoïde, le deuxième déflecteur opère de façon à dévier celui-ci ou ceux-ci dans une direction divergente du conduit de sortie.

Il en résulte que les eaux en sortie de la cuve sont conformes aux critères d'épuration en toutes circonstances ou quasiment.

Selon un mode de réalisation préféré, le deuxième élément déviateur présente un déflecteur incliné s'étendant d'une extrémité basse en chevauchement en hauteur du conduit de sortie, à une extrémité haute écartée du conduit de sortie.

Avantageusement, le deuxième élément déviateur s'étend d'une extrémité basse au voisinage de la cloison siphoïde à une extrémité haute en direction d'un recoin au voisinage de la paroi de l'enceinte.

On comprend que, de cette façon, les quelques rares floculats de matières pénétrant dans la zone siphoïde sont dirigés et accumulés dans un recoin de l'enceinte de clarification.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- les figures 1 et 2 sont des vues d'une station d'épuration selon l'art antérieur ;
- la figure 3 est une illustration schématique d'une partie de l'enceinte de clarification d'une station selon l'invention.

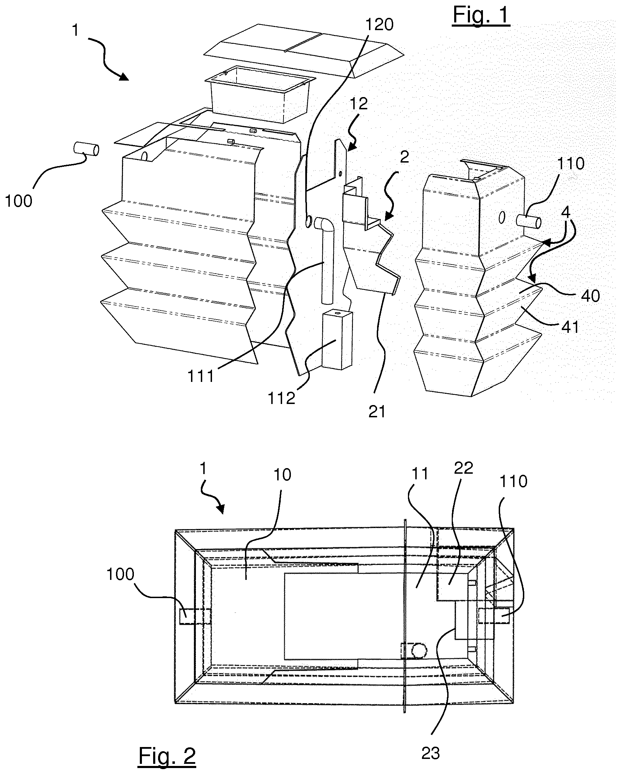

Dans une station d'épuration classique de l'art antérieur telle qu'illustrée par les figures 1 et 2, la cuve de la station comprend deux enceintes, à savoir :
- une enceinte d'aération 10 ;
- une enceinte de décantation/clarification 11.

La station intègre un compresseur (non représenté) à partir duquel s'étend un conduit d'air débouchant dans l'enceinte d'aération 10.

Le compresseur de l'enceinte d'aération est programmé pour effectuer des cycles successifs d'aération des eaux présentes dans l'enceinte d'aération. On rappelle effectivement que l'enceinte d'aération a pour but d'effectuer des phases successives aérobies et d'anoxie, en vue de provoquer une digestion des matières organiques présentes dans les eaux à traiter.

Tel que cela apparait sur la figure 1, un conduit 100 débouche dans l'enceinte d'aération, les eaux à traiter arrivant dans la station par ce conduit 100.

L'enceinte d'aération est séparée de l'enceinte de décantation/clarification par une paroi de séparation 12 dans laquelle est ménagé un orifice 120 communiquant avec un tuyau 111, s'étendant vers le fond de l'enceinte de clarification.

Lorsque le niveau augmente dans l'enceinte d'aération, ceci dû à l'arrivée d'eau par le conduit 100, jusqu'à atteindre l'orifice 120, de l'eau passe de l'enceinte d'aération vers l'enceinte de décantation/clarification par le tuyau 111.

L'enceinte de décantation/clarification intègre une pompe 112, activée par cycles successifs programmés, permettant de :
- laisser décanter les matières en suspension en phase de non fonctionnement de la pompe ;
- pomper les boues décantées (donc non digérées) et les renvoyer vers l'enceinte d'aération, par l'intermédiaire d'un tuyau (non représenté).

Un conduit 110 de sortie s'étend à partir de l'enceinte de décantation/clarification, pour permettre la sortie des eaux traitées. Ce conduit 110 est prévu en partie supérieure de l'enceinte de décantation/clarification. Par conséquent, il est nécessaire que le niveau d'eau augmente suffisamment dans l'enceinte de décantation/clarification, pour atteindre le niveau du conduit de sortie.

En outre, une zone siphoïde 20 constitue un passage obligé de circulation des eaux dans la station, reliant le volume interne de l'enceinte de clarification au conduit de sortie. Cette zone siphoïde, dans laquelle les eaux sont faiblement chargées en matières en suspension, est délimitée par une cloison siphoïde décrite plus en détails par la suite. Ainsi, l'extrémité inférieure de la cloison siphoïde forme un passage d'entrée pour les eaux qui montent dans la zone siphoïde.

Une station d'épuration selon l'invention s'applique à une station de ce type, et intègre par conséquent l'ensemble des moyens structurels décrits précédemment, pour fonctionner selon le processus également décrit précédemment.

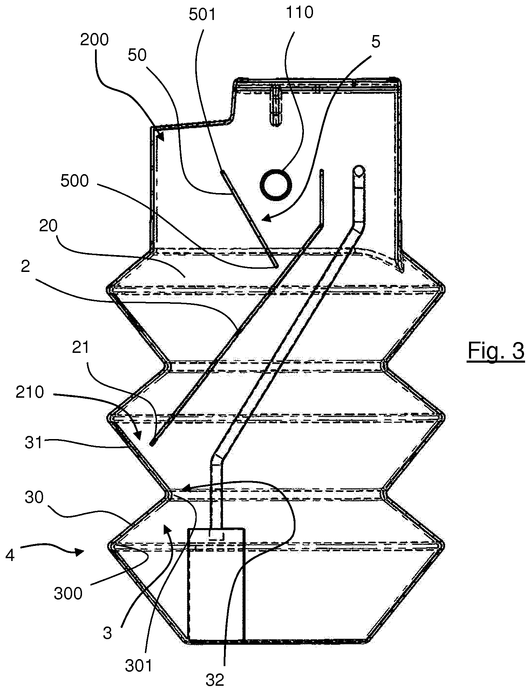

L'invention réside dans le perfectionnement appliqué à une telle station et est décrite ci-après en référence à la figure 3.

Telle qu'illustrée par cette figure 3, l'enceinte de clarification inclut, selon le principe de l'invention, un élément déviateur 3, apte à dévier le flux ascendant des eaux présentent dans l'enceinte de clarification. Cet élément déviateur 3 est placé sous le passage d'entrée 210 par lequel les eaux entrent dans la zone siphoïde 20.

Plus précisément, l'élément déviateur 3 présente un déflecteur incliné 30 s'étendant d'une extrémité basse 300 en chevauchement en hauteur du passage d'entrée 210, à une extrémité haute 301, écartée du passage d'entrée 210.

En d'autres termes, l'élément déviateur constitue un obstacle sous le passage d'entrée pour le flux ascendant, ainsi que pour les matières en suspension présentes dans le flux ascendant. Le flux ascendant et les matières en suspension qu'il contient vont ensuite être déviés en suivant le pan incliné jusqu'à une zone décalée, à l'intérieur de l'enceinte de clarification, du passage d'entrée 210 dans la zone siphoïde. Le déflecteur 30 s'étend à partir d'une paroi 4 de l'enceinte de clarification.

Plus précisément, le déflecteur fait partie d'un élément en saillie de la paroi de l'enceinte de clarification (faisant saillie vers l'intérieur de la cuve), c'est élément en saillie présentant une section triangulaire dont le pan inférieur (ou côté inférieur) constitue le déflecteur 30.

Tel que cela apparaît sur la figure 3, l'extrémité inférieure 21 de la cloison siphoïde délimite avec le pan supérieur 31 (ou côté supérieur) de l'élément en saillie le passage d'entrée 210 dans la zone siphoïde.

On note que l'extrémité inférieure 21 de la cloison siphoïde est positionnée de façon clairement distante de la pointe 32 de l'élément en saillie (à l'intersection du pan inférieur constituant le déflecteur 30 et du pan supérieur 31). Ainsi, l'extrémité inférieure 21 de la cloison siphoïde est placée préférentiellement à au moins la moitié de la longueur du pan supérieur 31 en partant de la pointe 32 de l'élément en saillie. Le passage d'entrée 210 dans la zone siphoïde est de cette façon relativement éloigné de la pointe de l'élément en saillie. Le flux ascendant contenant les matières en suspension est donc dévié par le déflecteur 30 jusqu'à la pointe puis remonte jusqu'à la cloison siphoïde, elle-même inclinée de façon à rediriger le flux ascendant vers la surface de l'eau, hors de la zone siphoïde avec quasiment aucune chance que le flux ascendant reprenne la direction le conduisant entre la cloison siphoïde et le pan supérieur 31.

Il est à noter que l'élément en saillie s'étendant à l'intérieur de l'enceinte de clarification présente une forme complémentaire d'un élément en saillie à l'extérieur de l'enceinte de clarification, donc également présentant une section de forme triangulaire.

Plus précisément, l'ensemble de la cuve présente trois éléments en saillie successifs en hauteur à l'extérieur de la paroi délimitant la cuve, formant chacun une ceinture périphérique dont la section est de forme triangulaire.

De plus, telle qu'illustrée par la figure 3, l'enceinte de clarification comprend un deuxième élément déviateur 5 du flux ascendant dans la zone siphoïde 20, placé au-dessus du passage d'entrée 210 et sous le conduit de sortie 110.

Selon le présent mode de réalisation, ce deuxième élément déviateur 5 présente un déflecteur incliné 50 s'étendant d'une extrémité basse 500 en chevauchement en hauteur du conduit de sortie 110 à une extrémité haute 501 écartée du conduit de sortie.

De cette façon, le deuxième élément déviateur fonctionne vis-à-vis du conduit de sortie de façon similaire au déflecteur 30 vis-à-vis du passage d'entrée 210 dans la zone siphoïde.

Telle qu'illustrée par la figure 3, on note que l'extrémité basse 500 du deuxième élément déviateur s'étend au voisinage de la cloison siphoïde 2, le deuxième élément déviateur s'étendant à partir de cette extrémité basse jusqu'à son extrémité haute 501 ceci en direction d'un recoin 200 de la zone siphoïde au voisinage de la paroi 4 de l'enceinte de clarification.

Par ailleurs, pour optimiser le fonctionnement d'une station d'épuration selon l'invention, on prévoit des cycles de fonctionnement avec temporisations successives de la façon suivante :
- avant que le cycle d'aération ne démarre, la recirculation est actionnée pendant une durée maîtrisée de 10 secondes à 1 minute par exemple ;
- en fin de recirculation et avant le démarrage de l'aération, une temporisation d'une durée prédéterminée, par exemple de l'ordre de 10 secondes à deux minutes, est appliquée pour que l'équivalent du volume d'eau transféré dans l'enceinte d'aération ait le temps de revenir dans l'enceinte de clarification sans entraîner de boues de l'enceinte d'aération.

De plus, au moment de la recirculation de l'enceinte de clarification vers l'enceinte d'aération, des moyens sont mis en oeuvre pour ralentir la vitesse de recirculation. avant que le cycle d'aération ne démarre, recirculation à l'aide de la pompe présente dans l'enceinte de clarification, est actionné pendant une durée prédéterminée, de l'ordre par exemple de 10 secondes à une minute.

## Revendications

1. Station d'épuration, du type comprenant une cuve (1) incluant au moins deux enceintes, l'une d'aération (10) et l'autre de clarification (11), les eaux à épurer passant de l'une dans l'autre, l'enceinte de clarification (11) étant reliée à un conduit de sortie (110) par une zone siphoïde (20) délimitée par une cloison siphoïde (2) dont une extrémité inférieure (21) forme un passage d'entrée (210) dans la zone siphoïde,
**caractérisée en ce que** l'enceinte de clarification (11) inclut au moins un élément déviateur (3) de flux ascendant placé sous le passage d'entrée (210) dans la zone siphoïde (20), présentant un déflecteur incliné (30) s'étendant de telle sorte que la projection du passage d'entrée, suivant une projection sur un plan horizontal du déflecteur incliné et du passage d'entrée, est contenue à l'intérieur de la projection du déflecteur incliné,
et **en ce que** le déflecteur (30) s'étend à partir d'une paroi (4) de l'enceinte de clarification, le déflecteur (30) faisant partie d'un élément en saillie de la paroi (4) de l'enceinte de clarification, cet élément en saillie de la paroi de l'enceinte de clarification faisant saillie vers l'intérieur de la cuve, l'élément en saillie présentant, dans un plan essentiellement vertical, une section triangulaire dont le pan inférieur constitue le déflecteur, l'extrémité inférieure (21) de la cloison siphoïde délimitant avec le pan supérieur (31) de l'élément en saillie le passage d'entrée (210) dans la zone siphoïde.

2. Station d'épuration selon la revendication 1, **caractérisée en ce qu'**elle comprend un deuxième élément déviateur (5) de flux ascendant dans la zone siphoïde (20), placé au-dessus du passage d'entrée (210) et sous le conduit de sortie (110).

3. Station d'épuration selon la revendication 2, **caractérisée en ce que** le deuxième élément déviateur (5) présente un déflecteur incliné (50) s'étendant d'une extrémité basse (500) en chevauchement en hauteur du conduit de sortie (210) à une extrémité haute (501) écartée du conduit de sortie (210).

4. Station d'épuration selon la revendication 3, **caractérisée en ce que** le deuxième élément déviateur (5) s'étend d'une extrémité basse (500) au voisinage de la cloison siphoïde (2) à une extrémité haute (501) en direction d'un recoin (200) au voisinage de la paroi de l'enceinte.

## Patentansprüche

1. Kläranlage der Art umfassend eine Wanne (1), darin eingeschlossen mindestens zwei Behälter, einer zur Belüftung (10) und der andere zur Abklärung (11), wobei das zu klärende Wasser von dem einen in den anderen passiert, wobei der Behälter zur Abklärung (11) mit einer Ausgangsleitung (110) durch einen saughebeartigen Bereich (20) verbunden ist, der von einer saughebeartigen Zwischenwand (2) begrenzt ist, von der ein unteres Ende (21) eine Eingangspassage (210) in den saughebeartigen Bereich bildet,
**dadurch gekennzeichnet, dass** der Behälter zur Abklärung (11) mindestens ein Ableitungselement (3) eines ansteigenden Stroms einschließt, das unter der Eingangspassage (210) im saughebeartigen Bereich (20) platziert ist, das eine geneigte Ableitung (30) aufweist, die sich derart erstreckt, dass der Vorsprung der Eingangspassage gemäß einem Vorsprung auf einer horizontalen Ebene der geneigten Ableitung und der Eingangspassage im Inneren des Vorsprungs der geneigten Ableitung enthalten ist,
und dadurch, dass sich die Ableitung (30) ausgehend von einer Wand (4) des Behälters zur Abklärung erstreckt, wobei die Ableitung (30) Teil eines vorspringenden Elements der Wand (4) des Behälters zur Abklärung ist, wobei dieses vorspringende Element der Wand des Behälters zur Abklärung hin zum Inneren der Wanne vorspringt, wobei das vorspringende Element auf einer im Wesentlichen vertikalen Ebene eine dreieckige Sektion darstellt, dessen unteres Fach die Ableitung ausmacht, wobei das untere Ende (21) der saughebeartigen Zwischenwand mit dem oberen Fach (31) des vorspringenden Elements die Eingangspassage (210) im saughebeartigen Bereich (2) begrenzt.

2. Kläranlage nach Anspruch 1, **dadurch gekennzeichnet, dass** sie ein zweites Ableitungselement (5) eines ansteigenden Stroms im saughebeartigen Bereich (20) umfasst, der über der Eingangspassage (210) und unter der Ausgangsleitung (110) platziert ist.

3. Kläranlage nach Anspruch 2, **dadurch gekennzeichnet, dass** das zweite Ableitungselement (5) eine geneigte Ableitung (50) aufweist, die sich von einem unteren Ende (500) in Überlappung in der Höhe der Ausgangsleitung (210) an ein oberes Ende (501) erstreckt, das von der Ausgangsleitung (210) beabstandet ist.

4. Kläranlage nach Anspruch 3, **dadurch gekennzeichnet, dass** sich das zweite Ableitungselement (5) von einem unteren Ende (500) in der Nähe der saughebeartigen Zwischenwand (2) an ein oberes Ende (501) in Richtung eines Winkels (200) benachbart der Wand des Behälters erstreckt.

## Claims

1. Wastewater treatment plant, of the type comprising a vessel (1) including at least two chambers, one aeration chamber (10) and one clarification chamber (11), whereby the water to be purified passes from one to the other, the clarification chamber (11) being connected to an output pipe (110) via a siphon zone (20) delimited by a siphon partition (2), a lower end (21) thereof forming an input passage (210) into the siphon zone,
**characterised in that** the clarification chamber (11) includes at least one upward flow by-pass element (3) placed beneath the input passage (210) into the siphon zone (20), having an inclined deflector (30) extending such that the projection of the input passage, according to a projection along a horizontal plane of the inclined deflector and of the input passage, is contained within the interior of the projection of the inclined deflector, and **in that** the deflector (30) extends from a wall (4) of the clarification chamber, the deflector (30) forming a part of an element protruding from the wall (4) of the clarification chamber, said element protruding from the wall of the clarification chamber protruding towards the interior of the vessel, the protruding element having, in a substantially vertical plane, a triangular section, the lower face of which constitutes the deflector, the lower end (21) of the siphon partition delimiting with the upper face (31) of the protruding element the input passage (210) into the siphon zone.

2. Wastewater treatment plant according to claim 1, **characterised in that** it comprises a second upward flow by-pass element (5) in the siphon zone (20), placed above the input passage (210) and beneath the output pipe (110).

3. Wastewater treatment plant according to claim 2, **characterised in that** the second by-pass element (5) has an inclined deflector (50) extending from a low end (500), overlapping the output pipe (210) at the top to a high end (501) distanced from the output pipe (210).

4. Wastewater treatment plant according to claim 3, **characterised in that** the second by-pass element (5) extends from a low end (500) in the vicinity of the siphon partition (2) to a high end (501) in the direction of a recess (200) in the vicinity of the wall of the chamber.
